# EUROPEAN PATENT SPECIFICATION

(11) **EP 3 312 095 B1**
(45) Date of publication and mention of the grant of the patent: **13.01.2021**
(21) Application number: 17195698.0
(22) Date of filing: 10.10.2017
(51) Int. Cl.: B64F 5/60

(54) **LIGHTNING STRIKE INCONSISTENCY AIRCRAFT DISPATCH MOBILE DISPOSITION TOOL**
MOBILES DISPOSITIONSWERKZEUG FÜR FLUGZEUGABFERTIGUNG MIT BLITZEINSCHLAGSINKONSISTENZ
OUTIL DE DISPOSITION MOBILE DE RÉGULATION D'INCONSISTANCE DE COUP DE FOUDRE D'AÉRONEF

(30) Priority: 23.10.2016 US 201615331864
(43) Date of publication of application: 25.04.2018
(73) Proprietor: The Boeing Company, Chicago, IL 60606-1596 (US)
(72) Inventor: SWEERS, Gregory James, Chicago, IL 60606-1596 (US)
(74) Representative: Duxbury, Stephen

(56) References cited:
- DE-A1-102009 015 648
- US-A1- 2007 010 923
- US-A1- 2010 063 650
- US-A1- 2010 235 037
- US-A1- 2014 022 281
- US-A1- 2016 185 469
- US-A1- 2016 264 262

## Description

### BACKGROUND INFORMATION

### 1. Field:

The present disclosure relates to methods and devices for characterizing characteristics of lightning-caused inconsistencies using images, and other sensor data, in order to compare the characteristics to a preexisting data set.

### 2. Background:

Current inspection for inconsistencies and benchmarking of an aircraft after a lightning strike requires a large amount of time to complete. Such inspection and benchmarking is usually performed by an aircraft operator. In many cases, additional undesirable time is required to communicate with a manufacturer on inconsistency details and proposed action plans of the aircraft operator. Thus, methods and devices for increasing both the speed and accuracy of inspection and benchmarking would be desirable.

US 2016/0264262 A1 discloses a device for visually inspecting the external surfaces of an aircraft including an inspection area to receive an aircraft, at least one visual inspection robot, and a control center. A movable platform of the robot supports a turret having an observation unit. The robot includes a processing unit which guides the movable platform and process the data received from the observation unit. The processing unit of the robot are configured to autonomously control the robot during the visual inspection of the external surfaces of the aircraft parked in the inspection area; to interrupt a visual inspection in the event of a detection of an anomaly on the external surface of the aircraft; to transmit a visual inspection data to the control center; and to receive instructions from the control center.

### SUMMARY

The present invention relates to a device according to claim 1 including a housing and a sensing module in the housing and configured to detect a lightning-caused inconsistency on an aircraft. The device also includes a data capture module in the housing and configured to capture images of the lightning-caused inconsistency. The device also includes an analysis module in the housing and configured to characterize characteristics of the lightning-caused inconsistency using the images and to compare the characteristics to a preexisting data set.

The present invention also provides for a method according to claim 9. The method includes moving a device around outside surfaces of an aircraft. The device includes a housing and a sensing module in the housing and configured to detect a lightning-caused inconsistency on the aircraft. The device also includes a data capture module in the housing and configured to capture images of the lightning-caused inconsistency. The device also includes an analysis module in the housing and configured to characterize characteristics of the lightning-caused inconsistency using the images and to compare the characteristics to a preexisting data set. The method also includes sensing the lightning-caused inconsistency with the sensing module. The method also includes scanning the outside surfaces of the aircraft with the data capture module and capturing images of the lightning-caused inconsistency. The method also includes characterizing, by the analysis module, the characteristics of the lightning-caused inconsistency using the images. The method also includes comparing, with the analysis module, the characteristics to a pre-existing data set to form a comparison. The method also includes determining, with the analysis module, whether the aircraft is airworthy based on the comparison, wherein a determination is formed. The method also includes transmitting the determination to a display device.

### BRIEF DESCRIPTION OF THE DRAWINGS

The present invention objectives and features thereof, will best be understood by reference to the following detailed description of the present invention of the present disclosure when read in conjunction with the accompanying drawings, wherein:
**Figure 1** is an illustration of an aircraft, in accordance with the present invention;
**Figure 2** is an illustration of a flowchart comparing current lightning-induced inconsistency reworking techniques with current lightning-induced inconsistency reworking techniques, in accordance with the present invention;
**Figure 3** is an illustration of a block diagram of a device for performing lightning-induced inconsistency assessment and benchmarking, in accordance with the present invention;
**Figure 4** is an illustration of a flowchart for reworking lightning-induced inconsistencies on an aircraft, in accordance with the present invention; and
**Figure 5** is an illustration of a data processing system, in accordance with the present invention.

### DETAILED DESCRIPTION

The present invention recognizes and takes into account that current techniques for inspecting aircraft and other composite structures for lightning-induced inconsistencies, and benchmarking such inconsistencies, require a large amount of time to complete. Additional significant time may be spent communicating with the aircraft manufacturer on inconsistency details and proposed aircraft operator action plans.

Current lightning strike inspections take about an 8-hour shift with a full crew of about 6 technicians to complete the inspection and inconsistency benchmarking. Inconsistency benchmarking is done by using a grease pen on the aircraft structure to draw grids that assist with communicating inconsistency size. Current processes also include use of a magnifying glass, of about 10 power magnification typically, to examine each fastener and structural skin location.

As indicated above, once an inconsistency is found and verified, a grease pen is used to indicate a grid of standard measure around the inconsistency used to communicate inconsistency size to engineering organizations. Several communication chains are normally created due to inconsistency description and location clarifications, resulting in higher costs for the manufacturer. A major aircraft manufacturer typically spends about 14,000 person-hours on supporting maintenance of lightning-induced inconsistencies.
Thus, the present invention provides for a tool that replaces and enhances current human inspection with a magnifying glass already in place requiring a maintenance technician to crawl the entire acreage of the aircraft inspecting and benchmarking lightning-induced inconsistencies. The tool also automates the disposition of the inconsistency to provide an indication whether the aircraft can be dispatched into continued operation for specified limited amount of time or cycles without reworking the inconsistency.

The present invention also provides for a hand-held or suspended tool (possibly from a fixed point or unmanned aerial vehicle (UAV) sometimes colloquially referred to as a drone) that combines dimensional data capture capability with internal inconsistency analysis capable of leveraging normal structural conditions intellectual data as a nominal data set to compare to information collected by the tool. This tool is made up of data capture hardware to capture images in three dimensions, heat inconsistency indication sensing, and structural inconsistency information combined with inconsistency assessment dispatch logic. The tool has a spatial awareness capability utilizing three-dimensional laser mapping technology and internal aircraft design three-dimensional maps to confirm exact locations on the aircraft structure. For location identification, the device utilizes aircraft on-board sensors to triangulate the devices image to capture position using comparator logic to determine lightning strike inconsistency specific location (frame, station, stringer, etc.).

The device may display an image on a screen that indicates alignment of an aircraft structure to actual recorded images providing confirmation of the location of the inconsistency and affected drawings. Alternatively or in addition, the device may project a grid onto the aircraft itself, thereby replacing the grease pen, hand-drawn grid described above.

The device is capable of measuring lightning strike inconsistency depth and size in a square area. Inconsistency information is gathered by the tool using design data and projecting a dimensional grid around the inconsistency site to quickly indicate the significance of the inconsistency.

Strike characterization information stored within the tool provides the ability for the tool to indicate whether immediate reworking is needed, or if limited operation is recommended. The tool may make available information, wirelessly, to outside resources for documenting the inconsistency and further analysis, if desired. Transmittal of inconsistency images may be superimposed with the structural elements involved and a grid around the inconsistency marking the inconsistency size.

Structural inconsistency information collected and compared to internally stored standards by the tool is used within an internal logic to assess a dispatch ability of the aircraft with known inconsistencies documented during the benchmarking procedure, which is also performed by the tool. Applying allowable lightning-induced inconsistency limit information in comparison to the benchmarked inconsistencies, the tool assists the user in planning aircraft utilization.

Thus, the tool provides for an advanced data capture capability, making the nominal design data available and ease of use. The tool will significantly reduce the down time caused by lightning-induced inconsistencies borne by the aircraft operator and also significantly reduce associated support costs borne by the aircraft manufacturer.

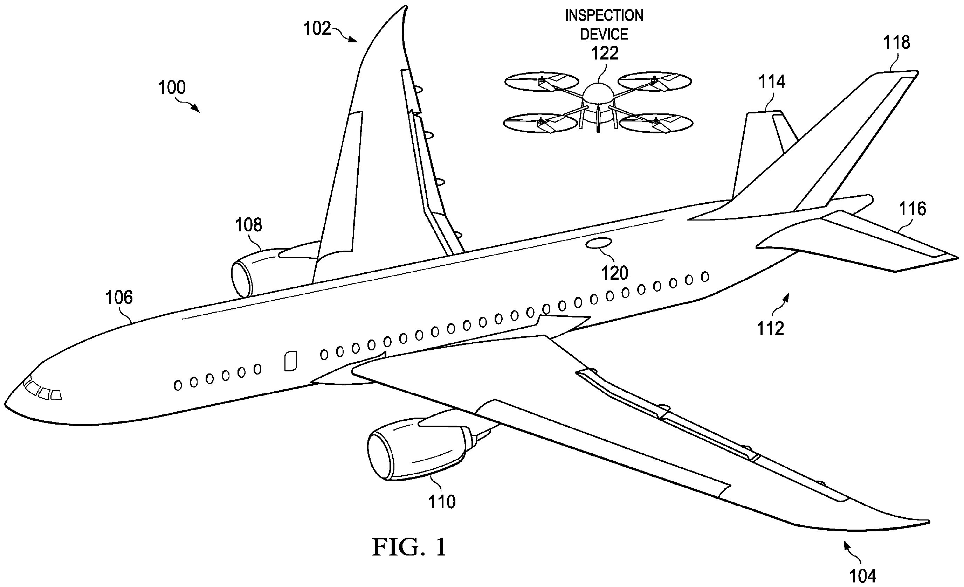

**Figure 1** is an illustration of an aircraft, in accordance with the present invention. Aircraft **100** includes wing **102** and wing **104** attached to fuselage **106;** engine **108** attached to wing **102;** and engine **110** attached to wing **104.** Fuselage **106** has tail section **112.** Horizontal stabilizer **114,** horizontal stabilizer **116,** and vertical stabilizer **118** are attached to tail section **112** of fuselage **106.**

Aircraft **100** may be struck by lightning during operation, or even while on the ground. Lightning strikes may cause inconsistency **120.** Particularly on modern aircraft made of composite materials, inconsistency **120** may be difficult to detect, requiring careful visual inspection or possibly non-destructive inspection techniques of the interior of the material that makes up aircraft **100.** In some cases, inconsistency **120** may need to be reworked in order to remove inconsistency **120** or properly replace the composite material in the area of inconsistency **120.** In other cases, inconsistency **120** may simply be noted and monitored for possible reworking at a later date.

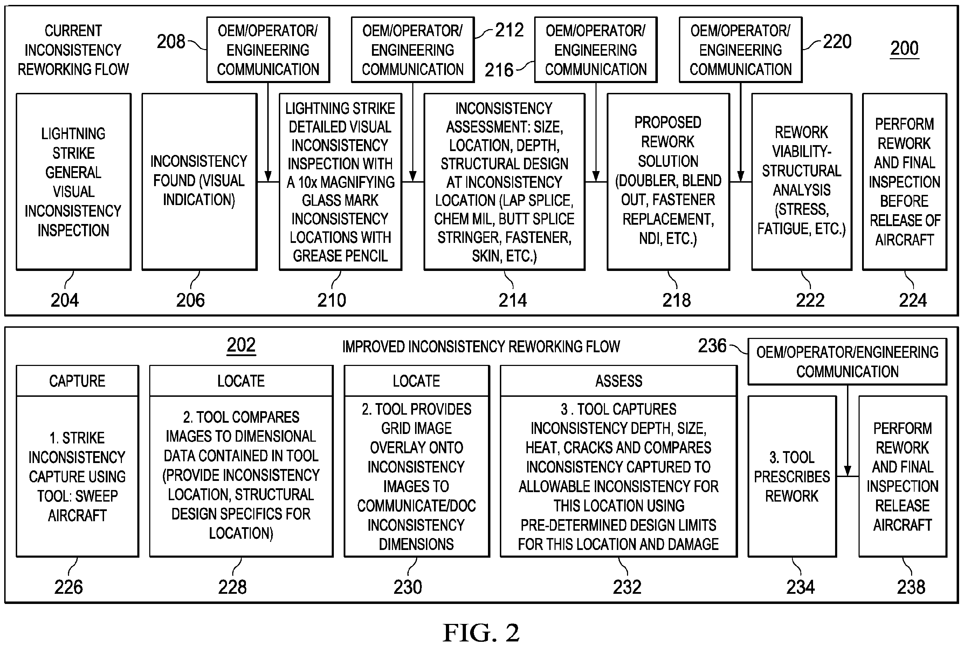

As indicated further in **Figure 2****,** manual visual inspection is tedious, time consuming, and expensive. Thus, the illustrative embodiments provide for an automated inconsistency detection system. In particular, inspection device **122** may be used to scan the entirety of (or portions of) aircraft **100.** In the present invention, inspection device **122** may be a flying machine such as an unmanned aerial vehicle. In another illustrative embodiment, inspection device **122** may be a robot that uses a robotic arm to move a camera and/or other sensor over the surface of aircraft **100.** Operation of inspection device **122** is described in more detail below.

Inspection device **122** may be characterized as an autonomous data capture device for capturing data on aircraft **100.** Inspection device **122** may also be characterized as a lightning-induced inconsistency aircraft dispatch mobile disposition tool.
Inspection device **122** is capable of three-dimensional location mapping and may overlay a grid on aircraft **100.** Inspection device **122** may correlate images of aircraft **100** and inconsistency **120** to design data on the normal or expected features of aircraft **100.** Inspection device **122** has on-board sensors usable to triangulate an inconsistency location and correlate to design data.

Inspection device **122** may have a screen, may project information to be displayed on a remote screen, or may project information directly on to a surface, such as the surface of aircraft **100.** The screen image or transmitted image shows the inconsistency location and nature. The displayed images may include drawings or images of what the site normally looks like, may transmit images of the inconsistency itself, and may transmit data such as inconsistency size (in terms of any or all of area, depth, or percent of missing material), as well as data taken by an on-board micrometer, visual imaging technology, heat sensors, or other sensors.

Inspection device **122** may transmit damage information to remote devices and may internally accesses design data. Inspection device **122** may record inconsistencies, perform trending or tracking of inconsistencies, and monitor crack growth propagation from previous inconsistencies and reworking. Thus, inspection device **122** may be characterized as a smart tool that provides recommendations for allowable limits on tolerating detected inconsistencies and also provides logic for suggesting recommended reworking.

**Figure 2** is an illustration of a flowchart comparing current lightning-induced inconsistency reworking techniques with current lightning-induced inconsistency reworking techniques, in accordance with the present invention. Both method **200** and method **202** may be performed on an aircraft, such as aircraft **100** of **Figure 1****.** However, method **200** represents the old, manual procedure for performing lightening-induced inconsistency assessment and reworking. Method **202** represents the new procedure provided for by present invention. Attention is first turned to method **200.** Initially, a lightning strike general visual inconsistency inspection is performed (operation **204**). An inconsistency is found by a visual indication (operation **206**). Communication of the inconsistency is then made to an OEM (original equipment manufacturer), such as the aircraft manufacturer; an operator, such as the aircraft operator; and/or an engineering department of either entity or by a third entity (operation **208**). Next, a lightning strike detailed visual inconsistency inspection with a 10 power magnifying glass is performed, with inconsistency locations marked with a grease pencil (operation **210**). Again, OEM, operator, and engineering communication takes place (operation **212**) for the new information.

Next, an inconsistency assessment is performed, assessing the size, location, depth, and structural design at the inconsistency location (including possibly any or multiple ones of: lap splice information, chem mil information, butt splice information, stringer information, fastener information, skin information, and others) (operation **214).** Again, OEM, operator, and engineering communication takes place (operation **216**).

Next, the technicians performing the inconsistency assessment proposes a rework solution, such as but not limited to a doubler, blend out, fastener replacement, non-destructive inspection, and others (operation **218**). Again, OEM, operator, and engineering communication takes place (operation **220**).

Then, the technicians perform reworking viability analysis and structural analysis, such as but not limited to stress, fatigue, and others (operation **222**). The technicians then perform the reworking and then perform a final inspection before release of the aircraft to operation (operation **224**). In all, flow **224** may involve more than a person-week of time by trained professionals, with multiple time choke points caused by multiple communication requirements. A "person-week" is defined as a total number of hours worked by one or more people that adds up to the number of hours in a work week, such as 40, or possibly even 60 or 80 hours. Thus, if ten people worked 4 hours each, then the total hours worked is 40 hours, which would be a "person-week."

Attention is now turned to method **202.** Method **202** may be performed by a lighting-induced inconsistency assessment tool, such as inspection device **122** of **Figure 1****.**
Initially, the tool performs a strike inconsistency capture by sweeping the aircraft (operation **226**). This operation may involve the tool taking images or using other sensors such as micrometers, voltmeters, heat sensors, or other sensors to gather data about the surface of the aircraft.

Next, the tool itself compares images to dimensional data contained in the tool, thereby providing inconsistency location, and structural design specifics for the location (operation **228**). The tool then provides a grid image overlay (either on a display screen and/or projected onto the aircraft) to communicate and document dimensions of the inconsistency (operation **230**). The tool then captures inconsistency depth, size, heat characteristics, cracks, and possibly other parameters and compares the assessed inconsistency to allowable inconsistencies for the given location using pre-determined design limits for that location and that type of inconsistency (operation **232**). This operation is performed while the tool continues to inspect other areas of the aircraft. The tool then prescribes a recommended rework for the inconsistency (operation **234**). Alternatively or in addition, the tool may recommend that the inconsistency be monitored, or reworked within a predetermined time frame.

Only at this point, after all inspection is completed, does the tool communicate information to the OEM, the operator, or the engineering personnel (operation **236**). Thus, the tool saves several communication operations relative to method **200.** Additionally, the information may be wirelessly transmitted, thereby also increasing the efficiency of communication.

After consultation, technicians then perform the rework, a final inspection, and release the aircraft to service (operation **238**). Thus, the tool saves considerable time and reduces the amount of time and money spent on inspecting and reworking the aircraft.

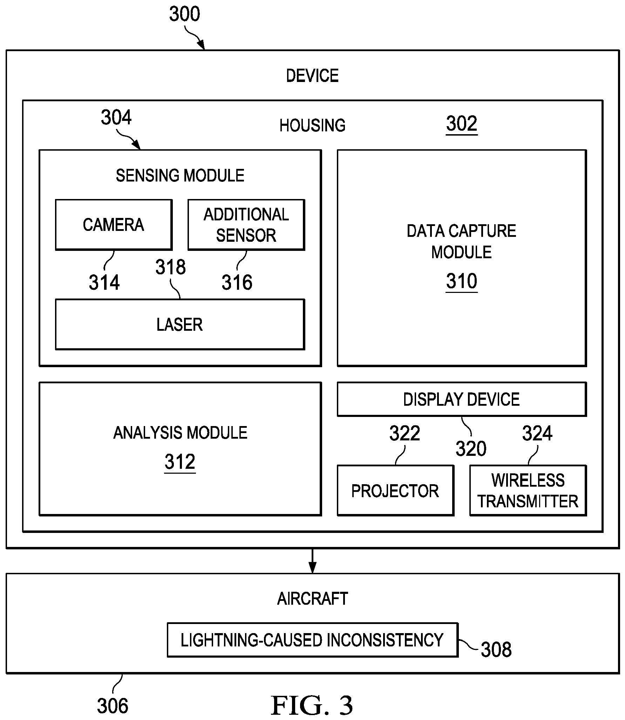

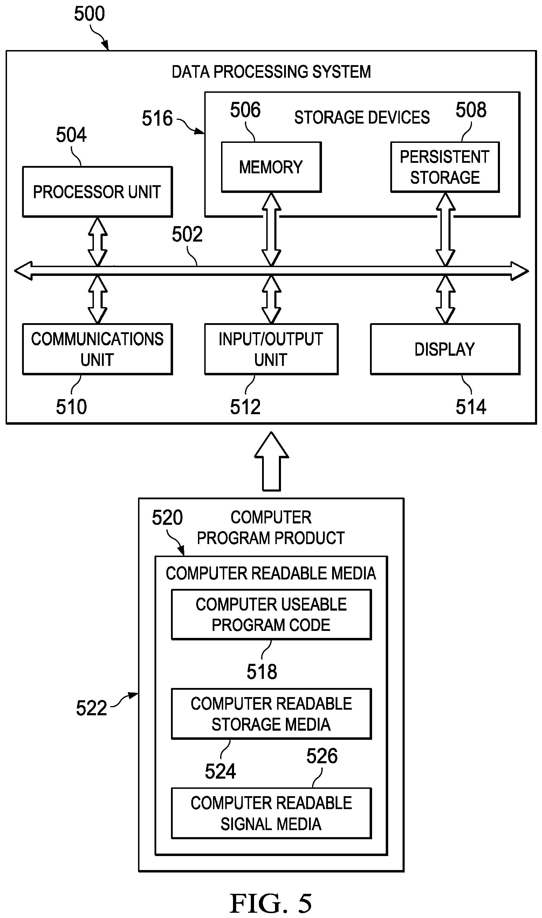

**Figure 3** is an illustration of a block diagram of a device for performing lightning-induced inconsistency assessment and benchmarking, in accordance with the present invention. Device **300** is an example of inspection device **122** of **Figure 1****.** Device **300** may be used to implement method **202** of **Figure 2****.** Device **300** may include a computer or other integrated circuits, such as data processing system **500** of **Figure 5****.**

Device **300** includes housing **302.** Device **300** also includes sensing module **304** in housing **302** and is configured to detect lightning-caused inconsistency **308** on aircraft **306.** Sensing module **304** may be one or more different data capturing devices, such as but not limited to cameras, micrometers, heat sensors, color sensors, volt meters, infrared detectors, ultrasound devices, lasers for inducing an ultrasound response in the aircraft material, and other devices.

Device **300** also includes data capture module **310** in housing **302** and configured to capture images of lightning-caused inconsistency **308.** Data capture module **310** may be a non-transitory computer recordable storage medium, a computer, or a wired or wireless transmitter for transmitting data to a remote storage facility.

Device **300** also includes analysis module **312** in housing **302** and is configured to characterize characteristics of lightning-caused inconsistency **308** using the images and to compare the characteristics to a preexisting data set. The preexisting data set is normal conditions of aircraft **306.**

Analysis module **312** may be a computer, such as data processing system **500** of **Figure 5****.** Analysis module **312** may also include software for performing the functions described herein, such as taking the data from data capture module **310** or sensing module **304** and comparing that data to preexisting data related to normal conditions of the aircraft.

Device **300** may be varied. For example, in the present invention, sensing module **304** may include camera **314** and/or one or more additional sensors, such as additional sensor **316.** In this case, data capture module **310** may be further configured to capture sensor data from additional sensor **316.** Additionally, analysis module **312** may be further configured to use both the sensor data and the images to characterize characteristics. Additional sensor **316** may be at least one device selected from the group consisting of: a heat sensor, a conductivity sensor, and a micrometer configured to sense a depth of lightning-caused inconsistency **308.**

Sensing module **304** can be configured to sense heat inconsistencies, metallic aberrations, and structural abnormalities in the aircraft. In this case, sensing module **304** includes laser **318** and camera **314** captures the images in three dimensions using three-dimensional laser mapping. The metallic aberrations may be at least one of a conductivity change and a mass redistribution within the material that make up aircraft **306.**

Device **300** may also include display device **320** on the housing and configured to display areas of lightning-caused inconsistency **308** on aircraft **306** based on a comparison of the characteristics of lightning-caused inconsistency **308** to the preexisting data set. Device **300** may also include projector **322** on housing **302** which can be configured to project a display of structural configuration information overlaid on areas of lightning-caused inconsistency **308** on aircraft **306** based on a comparison of the characteristics to the preexisting data set.

Device **300** can also include wireless transmitter **324** in housing **302.** Wireless transmitter **324** may be configured to transmit data for displaying the display as a three-dimensional grid with the structural elements of aircraft **306** on a remote display system. Additionally, wireless transmitter **324** in housing **302** may be configured to transmit data regarding lightning-caused inconsistency **308** to an outside inconsistency analysis resource.

Device **300** may be one of a hand-held or mounted to an autonomous inspection device. Thus, device **300** may be an unmanned aerial vehicle or other autonomously controlled device. In this case, device **300** further includes motor connected housing **302** and a lifting system connected to the motor and configured to cause the unmanned aerial vehicle to fly. An example of a lifting system could be wings, propellers, helicopter blades, jets, or other means for aerospace propulsion.

Analysis module **312** may be further configured to determine whether aircraft **306** is airworthy in view of lightning-caused inconsistency **308.** In this case, analysis module **312** may be configured to display a recommendation as to whether lightning-caused inconsistency **308** should be reworked prior to operating aircraft **306.**

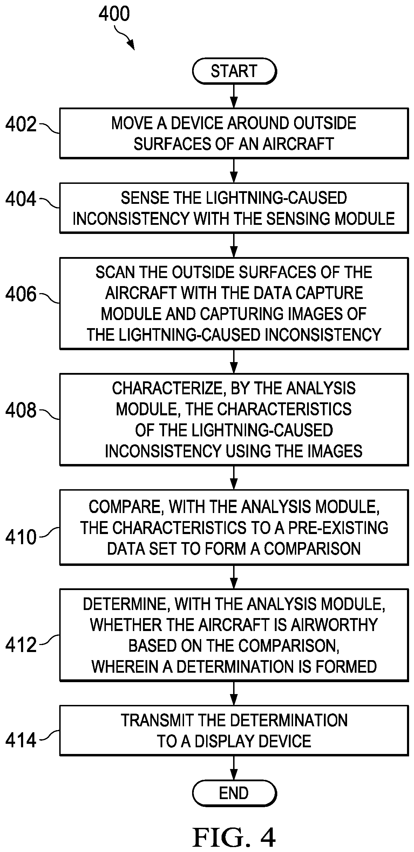

Device **300** may be further varied. For example, more or fewer sensors may be provided, more or fewer processors may be provided, and other functionality may be provided to device **300.** Thus, device **300** does not necessarily limit the claimed inventions. **Figure 4** is an illustration of a flowchart for reworking lightning-induced inconsistencies on an aircraft, in accordance with the present invention. Method **400** may be performed using a device such as inspection device **122** of **Figure 1** or device **300** of **Figure 3****.** Method **400** may be an alternative to method **202** of **Figure 2****.** Method **400** may be implemented using a data processing system in such a tool, which may be data processing system **500** of **Figure 5****.**

Method **400** initially begins by moving a device around outside surfaces of an aircraft (operation **402**). The device may include a housing; a sensing module in the housing and configured to detect a lightning-caused inconsistency on the aircraft; a data capture module in the housing and configured to capture images of the lightning-caused inconsistency; and an analysis module in the housing and configured to characterize characteristics of the lightning-caused inconsistency using the images and to compare the characteristics to a preexisting data set.

Method **400** then includes sensing the lightning-caused inconsistency with the sensing module (operation **404**). Next, method **400** includes scanning the outside surfaces of the aircraft with the data capture module and capturing images of the lightning-caused inconsistency (operation **406**). Method **400** then includes characterizing, by the analysis module, the characteristics of the lightning-caused inconsistency using the images (operation **408**).

Next, method **400** includes comparing, with the analysis module, the characteristics to a pre-existing data set to form a comparison (operation **410**). Method **400** then includes determining, with the analysis module, whether the aircraft is airworthy based on the comparison, wherein a determination is formed (operation **412**). Method **400** may also include transmitting the determination to a display device (operation **414**). The method may terminate thereafter.

Method **400** may be varied. Method **400** may include more or fewer operations.
For example, the pre-existing data set may be nominal structural data regarding the aircraft. Method **400** may also include projecting and superimposing, using a projector connected to the housing, a three-dimensional grid over an area of the aircraft where the lightning-caused inconsistency is located. In this case, method **400** may also include transmitting, via a transmitter in the housing, the three-dimensional grid for display on the remote display device.

Method **400** may also include transmitting to the remote display device a recommendation that the aircraft continue to be operated for a predetermined amount of time before the aircraft should receive maintenance for the lightning-caused inconsistency. Method **400** may also include transmitting to the remote display device a recommendation regarding limits placed on operation of the aircraft until the aircraft receives maintenance for the lightning-caused inconsistency.

The device may further comprise an unmanned aerial vehicle or other autonomous devices. In this case, moving the device may be flying the unmanned aerial vehicle around the outside surfaces, or moving a robotic arm of a robot to perform a robotic scan of the aircraft. Still other variations of method **400** are possible. Thus, method **400** does not necessarily limit the claimed inventions.

Turning now to **Figure 5****,** an illustration of a data processing system is depicted in accordance with the present invention. Data processing system **500** in **Figure 5** is an example of a data processing system that may be used to implement the illustrative embodiments, such used in inspection device **122** of **Figure 1** or as part of device **300,** including analysis module **312** or data capture module **310** of **Figure 3****.** Data processing system **500** may be used to implement the methods disclosed herein, such as method **202** of **Figure 2** or method **400** of **Figure 4****.**

In this illustrative example, data processing system **500** includes communications fabric **502,** which provides communications between processor unit **504,** memory **506,** persistent storage **508,** communications unit **510,** input/output (I/O) unit **512,** and display **514.** Processor unit **504** serves to execute instructions for software that may be loaded into memory **506.** This software may be an associative memory, content addressable memory, or software for implementing the processes described elsewhere herein. Processor unit **504** may be a number of processors, a multi-processor core, or some other type of processor, depending on the particular implementation. A number, as used herein with reference to an item, means one or more items. Further, processor unit **504** may be implemented using a number of heterogeneous processor systems in which a main processor is present with secondary processors on a single chip. As another illustrative example, processor unit **504** may be a symmetric multi-processor system containing multiple processors of the same type.

Memory **506** and persistent storage **508** are examples of storage devices **516.** A storage device is any piece of hardware that is capable of storing information, such as, for example, without limitation, data, computer useable program code in functional form, and/or other suitable information either on a temporary basis and/or a permanent basis. Storage devices **516** may also be referred to as computer readable storage devices in these examples. Memory **506,** in these examples, may be, for example, a random access memory or any other suitable volatile or non-volatile storage device. Persistent storage **508** may take various forms, depending on the particular implementation.

For example, persistent storage **508** may contain one or more components or devices. For example, persistent storage **508** may be a hard drive, a flash memory, a rewritable optical disk, a rewritable magnetic tape, or some combination of the above. The media used by persistent storage **508** also may be removable. For example, a removable hard drive may be used for persistent storage **508.**

Communications unit **510,** in these examples, provides for communications with other data processing systems or devices. In these examples, communications unit **510** is a network interface card. Communications unit **510** may provide communications through the use of either or both physical and wireless communications links.

Input/output (I/O) unit **512** allows for input and output of data with other devices that may be connected to data processing system **500.** For example, input/output (I/O) unit **512** may provide a connection for user input through a keyboard, a mouse, and/or some other suitable input device. Further, input/output (I/O) unit **512** may send output to a printer. Display **514** provides a mechanism to display information to a user.

Instructions for the operating system, applications, and/or programs may be located in storage devices **516,** which are in communication with processor unit **504** through communications fabric **502.** In these illustrative examples, the instructions are in a functional form on persistent storage **508.** These instructions may be loaded into memory **506** for execution by processor unit **504.** The processes of the different embodiments may be performed by processor unit **504** using computer implemented instructions, which may be located in a memory, such as memory **506.**

These instructions are referred to as program code, computer usable program code, or computer readable program code that may be read and executed by a processor in processor unit **504.** The computer useable program code in the different embodiments may be embodied on different physical or computer readable storage media, such as memory **506** or persistent storage **508.**

Computer useable program code **518** is located in a functional form on computer readable media **520** that is selectively removable and may be loaded onto or transferred to data processing system **500** for execution by processor unit **504.** Computer useable program code **518** and computer readable media **520** form computer program product **522** in these examples. In one example, computer readable media **520** may be computer readable storage media **524** or computer readable signal media **526.** Computer readable storage media **524** may include, for example, an optical or magnetic disk that is inserted or placed into a drive or other device that is part of persistent storage **508** for transfer onto a storage device, such as a hard drive, that is part of persistent storage **508.** Computer readable storage media **524** also may take the form of a persistent storage, such as a hard drive, a thumb drive, or a flash memory, that is connected to data processing system **500.** In some instances, computer readable storage media **524** may not be removable from data processing system **500.**

Alternatively, computer useable program code **518** may be transferred to data processing system **500** using computer readable signal media **526.** Computer readable signal media **526** may be, for example, a propagated data signal containing computer useable program code **518.** For example, computer readable signal media **526** may be an electromagnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples.

Computer useable program code **518** may be downloaded over a network to persistent storage **508** from another device or data processing system through computer readable signal media **526** for use within data processing system **500.** For instance, the computer useable program code stored in a computer readable storage medium in a server data processing system may be downloaded over a network from the server to data processing system **500.** The data processing system providing computer useable program code **518** may be a server computer, a client computer, or some other device capable of storing and transmitting computer useable program code **518.**

The different components illustrated for data processing system **500** are not meant to provide architectural limitations to the manner in which the present invention may be implemented. The present invention may be implemented in a data processing system including components in addition to or in place of those illustrated for data processing system **500.** Other components shown in **Figure 5** can be varied from the illustrative examples shown. The present invention may be implemented using any hardware device or system capable of running computer useable program code. As one example, the data processing system may include organic components integrated with inorganic components and/or may be comprised entirely of organic components excluding a human being. For example, a storage device may be comprised of an organic semiconductor.

Processor unit **504** may take the form of a hardware unit that has circuits that are manufactured or configured for a particular use. This type of hardware may perform operations without needing computer useable program code to be loaded into a memory from a storage device to be configured to perform the operations.

For example, when processor unit **504** takes the form of a hardware unit, processor unit **504** may be a circuit system, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, programmable array logic, a field programmable logic array, a field programmable gate array, and other suitable hardware devices. With this type of implementation, computer useable program code **518** may be omitted because the processes for the different embodiments are implemented in a hardware unit.

Processor unit **504** may be implemented using a combination of processors found in computers and hardware units. Processor unit **504** may have a number of hardware units and a number of processors that are configured to run computer useable program code **518.** With this depicted example, some of the processes may be implemented in the number of hardware units, while other processes may be implemented in the number of processors.

A storage device in data processing system **500** can be any hardware apparatus that may store data. Memory **506,** persistent storage **508,** and computer readable media **520** are examples of storage devices in a tangible form.

A bus system may be used to implement communications fabric **502** and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory **506,** or a cache, such as found in an interface and memory controller hub that may be present in communications fabric **502.**

Data processing system **500** may also include an associative memory. The associative memory may be in communication with communications fabric **502.** An associative memory may also be in communication with, or may be considered part of storage devices **516.** Multiple associative memories may be present.

As used herein, the term "associative memory" refers to a plurality of data and a plurality of associations among the plurality of data. The plurality of data and the plurality of associations may be stored in a non-transitory computer readable storage medium. The plurality of data may be collected into associated groups. The associative memory may be configured to be queried based on at least indirect relationships among the plurality of data in addition to direct correlations among the plurality of data. Thus, an associative memory may be configured to be queried based solely on direct relationships, based solely on at least indirect relationships, as well as based on combinations of direct and at least indirect relationships. An associative memory may be a content addressable memory.

Thus, an associative memory may be characterized as a plurality of data and a plurality of associations among the plurality of data. The plurality of data may be collected into associated groups. Further, the associative memory may be configured to be queried based on at least one relationship, selected from a group that includes direct and at least indirect relationships, or from among the plurality of data in addition to direct correlations among the plurality of data. An associative memory may also take the form of software. Thus, an associative memory also may be considered a process by which information is collected into associated groups in the interest of gaining new insight based on relationships rather than direct correlation. An associative memory may also take the form of hardware, such as specialized processors or a field programmable gate array.

As used herein, the term "entity" refers to an object that has a distinct, separate existence, though such existence need not be a material existence. Thus, abstractions and legal constructs may be regarded as entities. As used herein, an entity need not be animate. Associative memories work with entities.

The different illustrative embodiments can take the form of an entirely hardware embodiment, -or an embodiment containing both hardware and software elements, which includes but is not limited to forms such as, for example, firmware, resident software, and microcode. For the purposes of this disclosure, a computer usable or computer readable medium can generally be any tangible apparatus that can contain, store, communicate, propagate, or transport the program for use by or in connection with the instruction execution system, apparatus, or device.

The computer usable or computer readable medium can be, for example, without limitation an electronic, magnetic, optical, electromagnetic, infrared, or semiconductor system, or a propagation medium. Non-limiting examples of a computer readable medium include a semiconductor or solid state memory, magnetic tape, a removable computer diskette, a random access memory (RAM), a read-only memory (ROM), a rigid magnetic disk, and an optical disk. Optical disks may include compact disk - read only memory (CD-ROM), compact disk - read/write (CD-R/W), and DVD.

Further, a computer usable or computer readable medium may contain or store a computer readable or computer usable program code such that when the computer readable or computer usable program code is executed on a computer, the execution of this computer readable or computer usable program code causes the computer to transmit another computer readable or computer usable program code over a communications link. This communications link may use a medium that is, for example without limitation, physical or wireless.

A data processing system suitable for storing and/or executing computer readable or computer usable program code will include one or more processors coupled directly or indirectly to memory elements through a communications fabric, such as a system bus. The memory elements may include local memory employed during actual execution of the computer useable program code, bulk storage, and cache memories which provide temporary storage of at least some computer readable or computer usable program code to reduce the number of times code may be retrieved from bulk storage during execution of the code.

Input/output or I/O devices can be coupled to the system either directly or through intervening I/O controllers. These devices may include, for example, without limitation, keyboards, touch screen displays, and pointing devices. Different communications adapters may also be coupled to the system to enable the data processing system to become coupled to other data processing systems or remote printers or storage devices through intervening private or public networks. Non-limiting examples of modems and network adapters are just a few of the currently available types of communications adapters.

The description of the different illustrative embodiments has been presented for purposes of illustration and description, and is not intended to be exhaustive or limited to the embodiments in the form disclosed. Many modifications and variations will be apparent to those of ordinary skill in the art. Further, different illustrative embodiments may provide different features as compared to other illustrative embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A device (122, 300) comprising:
- a housing (302);
- a sensing module (304) in the housing and configured to detect a lightning-caused inconsistency (308) on an aircraft (100, 306);
- a data capture module (310) in the housing and configured to capture images of the lightning-caused inconsistency; and
- an analysis module (312) in the housing and configured to characterize characteristics of the lightning-caused inconsistency using the images and to compare the characteristics to a preexisting data set, wherein the analysis module is further configured to determine whether the aircraft is airworthy in view of the lightning-caused inconsistency, and to display a recommendation as to whether the lightning-caused inconsistency should be reworked prior to operating the aircraft, wherein the recommendation comprises a prescription of recommended rework for the inconsistency and/or a recommendation that the inconsistency be monitored or reworked within a predetermined time frame; and wherein the recommendation is sent to a display for an inspecting party only after completion of all inspection to reduce communications operations.

2. The device of claim 1, wherein the sensing module further includes an additional sensor (316), wherein the data capture module further configured to capture sensor data from the additional sensor, and wherein the analysis module is further configured to use both the sensor data and the images to characterize characteristics.

3. The device of any one of claims 1-2, wherein the preexisting data set comprises normal conditions of the aircraft.

4. The device of any one of claims 1-3, further comprising:
- a display device (320) on the housing and configured to display areas of the lightning-caused inconsistency on the aircraft based on a comparison of the characteristics of the lightning-caused inconsistency to the preexisting data set.

5. The device of any one of claims 1-4, further comprising:
- a projector (322) on the housing and configured to project a display of structural configuration information of the aircraft overlaid on areas of the lightning-caused inconsistency on the aircraft based on a comparison of the characteristics to the preexisting data set.

6. The device of any one of claims 1-5, wherein the device is one of hand-held or mounted to an autonomous inspection device.

7. The device of any one of claims 1-6, wherein the device comprises an unmanned aerial vehicle or other autonomously controlled device and the device further comprises:
- a motor connected the housing; and
- a lifting system connected to the motor and configured to cause the unmanned aerial vehicle to fly.

8. The device of any one of claims 1-7, further comprising:
- a wireless transmitter (324) in the housing and configured to transmit data regarding the lighting-caused inconsistency to outside inconsistency analysis resources.

9. A method (400) comprising:
- moving (402) a device (122, 300) according to any one of the previous claims around outside surfaces of an aircraft (100, 306), the device comprising:
∼ a housing (302);
∼ a sensing module (304) in the housing and configured to detect a lightning-caused inconsistency (308) on the aircraft;
∼ a data capture module (310) in the housing and configured to capture images of the lightning-caused inconsistency; and
∼ an analysis module (312) in the housing and configured to characterize characteristics of the lightning-caused inconsistency using the images and to compare the characteristics to a preexisting data set;
- sensing (404) the lightning-caused inconsistency with the sensing module;
- scanning (406) the outside surfaces of the aircraft with the data capture module and capturing images of the lightning-caused inconsistency;
- characterizing (408), by the analysis module, the characteristics of the lightning-caused inconsistency using the images;
- comparing (410), with the analysis module, the characteristics to a pre-existing data set to form a comparison;
- determining (412), with the analysis module, whether the aircraft is airworthy based on the comparison, wherein a determination is formed; and
- transmitting (414) the determination to a remote display device (320), wherein the transmitting is performed only after all the inspection is completed.

10. The method of claim 9, wherein the pre-existing data set comprises nominal structural data regarding the aircraft.

11. The method of any one of claims 9-10, further comprising:
projecting and superimposing, using a projector (322) connected to the housing, a three-dimensional grid over an area of the aircraft where the lightning-caused inconsistency is located.

12. The method of any one of claims 9-11, further comprising:
- transmitting to the remote display device a recommendation that the aircraft continue to be operated for a predetermined amount of time before the aircraft should receive maintenance for the lightning-caused inconsistency.

13. The method of any one of claims 9-12, further comprising:
- transmitting to the remote display device a recommendation regarding limits placed on operation of the aircraft until the aircraft receives maintenance for the lightning-caused inconsistency.

14. The method of any one of claims 9-13, wherein the device further comprises an unmanned aerial vehicle or other autonomous device, and wherein moving the device comprises flying the unmanned aerial vehicle around the outside surfaces, or moving a robotic arm of a robot to perform a robotic scan of the aircraft.

## Patentansprüche

1. Vorrichtung (122, 300), die Folgendes umfasst:
- ein Gehäuse (302);
- ein in dem Gehäuse befindliches Erfassungsmodul (304), das dazu konfiguriert ist, eine durch Blitzschlag verursachte Unstimmigkeit (308) an einem Flugzeug (100, 306) zu erfassen;
- ein in dem Gehäuse befindliches Datenaufnahmemodul (310), das dazu konfiguriert ist, Bilder der durch Blitzschlag verursachten Unstimmigkeit aufzunehmen; und
- ein in dem Gehäuse befindliches Analysemodul (312), das dazu konfiguriert ist, unter Verwendung der Bilder Eigenschaften der durch Blitzschlag verursachten Unstimmigkeit zu charakterisieren und die Eigenschaften mit einem bereits vorhandenen Datensatz zu vergleichen, wobei das Analysemodul weiterhin dazu konfiguriert ist, zu bestimmen, ob das Flugzeug angesichts der durch Blitzschlag verursachten Unstimmigkeit flugtauglich ist, und eine Empfehlung anzuzeigen, ob die durch Blitzschlag verursachte Unstimmigkeit vor dem Betrieb des Flugzeugs überarbeitet werden soll, wobei die Empfehlung eine Vorschrift einer empfohlenen Überarbeitung der Unstimmigkeit und/oder eine Empfehlung, dass die Unstimmigkeit innerhalb eines vorbestimmten Zeitrahmens überwacht oder überarbeitet werden soll, umfasst; und wobei die Empfehlung erst nach Abschluss aller Untersuchungen an eine Anzeige für eine untersuchende Partei gesendet wird, um Kommunikationsvorgänge zu reduzieren.

2. Vorrichtung nach Anspruch 1, wobei das Erfassungsmodul weiterhin einen zusätzlichen Sensor (316) beinhaltet, wobei das Datenaufnahmemodul weiterhin dazu konfiguriert ist, Sensordaten von dem zusätzlichen Sensor aufzunehmen, und wobei das Analysemodul weiterhin dazu konfiguriert ist, sowohl die Sensordaten als auch die Bilder zum Charakterisieren der Eigenschaften zu verwenden.

3. Vorrichtung nach einem der Ansprüche 1 und 2, wobei der bereits vorhandene Datensatz Normalbedingungen des Flugzeugs umfasst.

4. Vorrichtung nach einem der Ansprüche 1 bis 3, die weiterhin Folgendes umfasst:
- eine an dem Gehäuse befindliche Anzeigevorrichtung (320), die dazu konfiguriert ist, Bereiche der durch Blitzschlag verursachten Unstimmigkeit an dem Flugzeug anzuzeigen, und zwar basierend auf einem Vergleich der Eigenschaften der durch Blitzschlag verursachten Unstimmigkeit mit dem bereits vorhandenen Datensatz.

5. Vorrichtung nach einem der Ansprüche 1 bis 4, die weiterhin Folgendes umfasst:
- einen an dem Gehäuse befindlichen Projektor (322), der dazu konfiguriert ist, eine Anzeige von strukturellen Konfigurationsinformationen des Flugzeugs überlagert auf Bereichen der durch Blitzschlag verursachten Unstimmigkeit an dem Flugzeug zu projizieren, und zwar basierend auf einem Vergleich der Eigenschaften mit dem bereits vorhandenen Datensatz.

6. Vorrichtung nach einem der Ansprüche 1 bis 5, wobei die Vorrichtung entweder tragbar ist oder an einer autonomem Untersuchungsvorrichtung angebracht ist.

7. Vorrichtung nach einem der Ansprüche 1 bis 6, wobei die Vorrichtung ein unbemanntes Luftfahrzeug oder eine andere autonom gesteuerte Vorrichtung umfasst, wobei die Vorrichtung weiterhin Folgendes umfasst:
- einen mit dem Gehäuse verbundenen Motor; und
- ein mit dem Motor verbundenen Hubsystem, das dazu konfiguriert ist, zu bewirken, dass das unbemannte Luftfahrzeug fliegt.

8. Vorrichtung nach einem der Ansprüche 1 bis 7, die weiterhin Folgendes umfasst:
- eine in dem Gehäuse befindliche drahtlose Übertragungseinrichtung (324), die dazu konfiguriert ist, Daten betreffend die durch Blitzschlag verursachte Unstimmigkeit zur Unstimmigkeitsanalyse an äußere Ressourcen zu übertragen.

9. Verfahren (400), das Folgendes umfasst:
- Bewegen (402) einer Vorrichtung (122, 300) nach einem der vorhergehenden Ansprüche um Außenflächen eines Flugzeugs (100, 306) herum, wobei die Vorrichtung Folgendes umfasst:
- ein Gehäuse (302);
- ein in dem Gehäuse befindliches Erfassungsmodul (304), das dazu konfiguriert ist, eine durch Blitzschlag verursachte Unstimmigkeit (308) an dem Flugzeug zu erfassen;
- ein in dem Gehäuse befindliches Datenaufnahmemodul (310), das dazu konfiguriert ist, Bilder der durch Blitzschlag verursachten Unstimmigkeit aufzunehmen; und
- ein in dem Gehäuse befindliches Analysemodul (312), das dazu konfiguriert ist, unter Verwendung der Bilder Eigenschaften der durch Blitzschlag verursachten Unstimmigkeit zu charakterisieren und die Eigenschaften mit einem bereits vorhandenen Datensatz zu vergleichen;
- Erfassen (404) der durch Blitzschlag verursachten Unstimmigkeit mit dem Erfassungsmodul;
- Abtasten (406) der Außenflächen des Flugzeugs mit dem Datenaufnahmemodul und Aufnehmen von Bildern der durch Blitzschlag verursachten Unstimmigkeit;
- mittels des Analysemoduls, Charakterisieren (408) der Eigenschaften der durch Blitzschlag verursachten Unstimmigkeit unter Verwendung der Bilder;
- mittels des Analysemoduls, Vergleichen (410) der Eigenschaften mit einem bereits vorhandenen Datensatz, um einen Vergleich durchzuführen;
- mittels des Analysemoduls, Bestimmen (412), ob das Flugzeug flugtauglich ist, und zwar basierend auf dem Vergleich, wobei eine Bestimmung getroffen wird; und
- Übertragen (414) der Bestimmung an eine entfernte Anzeigevorrichtung (320), wobei die Übertragung erst durchgeführt wird, wenn alle Untersuchungen abgeschlossen sind.

10. Verfahren nach Anspruch 9, wobei der bereits vorhandene Datensatz nominale Strukturdaten betreffend das Flugzeug umfasst.

11. Verfahren nach einem der Ansprüche 9 und 10, das weiterhin Folgendes umfasst:
unter Verwendung eines mit dem Gehäuse verbundenen Projektors (322), Projizieren und Überlagern eines dreidimensionalen Gitters auf einen Bereich des Flugzeugs, an dem sich die durch Blitzschlag verursachte Unstimmigkeit befindet.

12. Verfahren nach einem der Ansprüche 9 bis 11, das weiterhin Folgendes umfasst:
- Übertragen einer Empfehlung an die entfernte Anzeigevorrichtung, dass das Flugzeug für einen vorbestimmten Zeitraum weiter betrieben werden soll, bis das Flugzeug eine Wartung der durch Blitzschlag verursachten Unstimmigkeit erhält.

13. Verfahren nach einem der Ansprüche 9 bis 12, das weiterhin Folgendes umfasst:
- Übertragen einer Empfehlung an die entfernte Anzeigevorrichtung im Hinblick auf Einschränkungen des Betriebs des Flugzeugs, bis das Flugzeug eine Wartung der durch Blitzschlag verursachten Unstimmigkeit erhält.

14. Vorrichtung nach einem der Ansprüche 9 bis 13, wobei die Vorrichtung weiterhin ein unbemanntes Luftfahrzeug oder eine andere autonome Vorrichtung umfasst, und wobei das Bewegen der Vorrichtung das Fliegen des unbemannten Luftfahrzeugs um die Außenflächen herum oder das Bewegen eines Roboterarms eines Roboters zum Durchführen einer Roboterabtastung des Flugzeugs umfasst.

## Revendications

1. Appareil (122, 300) comprenant :
- une enveloppe (302) ;
- un module de détection (304) présent dans l'enveloppe et conçu pour détecter une dissemblance due à la foudre (308) sur un aéronef (100, 306) ;
- un module de capture de données (310) présent dans l'enveloppe et conçu pour capturer des images de la dissemblance due à la foudre ; et
- un module d'analyse (312) présent dans l'enveloppe et conçu pour caractériser des caractéristiques de la dissemblance due à la foudre au moyen des images et pour comparer les caractéristiques à un ensemble de données préexistantes, ledit module d'analyse étant conçu en outre pour déterminer si l'aéronef est apte au vol au vu de la dissemblance due à la foudre, et pour afficher une recommandation ayant trait au fait que la dissemblance due à la foudre doive être réusinée avant la mise en service de l'aéronef, ladite recommandation comprenant une prescription de recommandation de réusinage concernant la dissemblance et/ou une recommandation du fait que la dissemblance soit surveillée ou réusinée dans un laps de temps prédéterminé ; et la recommandation étant envoyée à un organe d'affichage propre à une section inspection uniquement après que toute l'inspection a été effectuée afin de réduire les opérations de communication.

2. Appareil selon la revendication 1, dans lequel le module de détection comporte en outre un détecteur supplémentaire (316), dans lequel le module de capture de données est conçu en outre pour capturer des données de détecteur issues du détecteur supplémentaire, et dans lequel le module d'analyse est conçu en outre pour utiliser les données de détecteur ainsi que les images pour caractériser des caractéristiques.

3. Appareil selon l'une quelconque des revendications 1 et 2, dans lequel l'ensemble de données préexistantes comprend les conditions normales de l'aéronef.

4. Appareil selon l'une quelconque des revendications 1 à 3, comprenant en outre :
- un dispositif d'affichage (320) présent sur l'enveloppe et conçu pour afficher des zones de la dissemblance due à la foudre présente sur l'aéronef compte tenu d'une comparaison des caractéristiques de la dissemblance due à la foudre et de l'ensemble de données préexistantes.

5. Appareil selon l'une quelconque des revendications 1 à 4, comprenant en outre :
- un projecteur (322) présent sur l'enveloppe et conçu pour projeter un visuel d'informations de configuration structurelle de l'aéronef superposée sur des zones de la dissemblance due à la foudre présente sur l'aéronef compte tenu d'une comparaison des caractéristiques et de l'ensemble de données préexistantes.

6. Appareil selon l'une quelconque des revendications 1 à 5, dans lequel l'appareil est portatif ou bien monté sur un dispositif d'inspection autonome.

7. Appareil selon l'une quelconque des revendications 1 à 6, dans lequel l'appareil comprend un appareil aérien sans pilote ou un autre appareil à commande autonome, et l'appareil comprend en outre :
- un moteur raccordé à l'enveloppe, et
- un système de sustentation raccordé au moteur et conçu pour amener l'appareil aérien sans pilote à voler.

8. Appareil selon l'une quelconque des revendications 1 à 7, comprenant en outre :
- un émetteur sans fil (324) présent dans l'enveloppe et conçu pour émettre des données concernant la dissemblance due à la foudre à destination de ressources extérieures d'analyse de dissemblance.

9. Procédé (400) comprenant :
- le déplacement (402) d'un appareil (122, 300) selon l'une quelconque des revendications précédentes autour de surfaces extérieures d'un aéronef (100, 306), l'appareil comprenant :
- une enveloppe (302) ;
- un module de détection (304) présent dans l'enveloppe et conçu pour détecter une dissemblance due à la foudre (308) sur l'aéronef ;
- un module de capture de données (310) présent dans l'enveloppe et conçu pour capturer des images de la dissemblance due à la foudre ; et
- un module d'analyse (312) présent dans l'enveloppe et conçu pour caractériser des caractéristiques de la dissemblance due à la foudre au moyen des images et pour comparer les caractéristiques à un ensemble de données préexistantes ;
- la détection (404) de la dissemblance due à la foudre à l'aide du module de détection ;
- le balayage (406) des surfaces extérieures de l'aéronef par le module de capture de données et la capture d'images de la dissemblance due à la foudre ;
- la caractérisation (408), par le module d'analyse, des caractéristiques de la dissemblance due à la foudre au moyen des images ;
- la comparaison (410), au moyen du module d'analyse, des caractéristiques à un ensemble de données préexistantes afin de réaliser une comparaison ;
- la détermination (412), au moyen du module d'analyse, du fait que l'aéronef est apte au vol ou non compte tenu de la comparaison, moyennant quoi une détermination est réalisée ; et
- l'émission (414) de la détermination à destination d'un dispositif d'affichage distant (320), ladite émission étant réalisée uniquement après que toute l'inspection a été effectuée.

10. Procédé selon la revendication 9, dans lequel l'ensemble de données préexistantes comprend des données structurelles nominales concernant l'aéronef.

11. Procédé selon l'une quelconque des revendications 9 et 10, comprenant en outre :
la projection et la superposition, au moyen d'un projecteur (322) raccordé à l'enveloppe, d'une grille tridimensionnelle sur une zone de l'aéronef où se situe la dissemblance due à la foudre.

12. Procédé selon l'une quelconque des revendications 9 à 11, comprenant en outre :
- l'émission, à destination du dispositif d'affichage distant, d'une recommandation visant à ce que l'aéronef continue à être mis en service pour une durée prédéterminée avant qu'il ne doive faire l'objet d'une maintenance concernant la dissemblance due à la foudre.

13. Procédé selon l'une quelconque des revendications 9 à 12, comprenant en outre :
- l'émission, à destination du dispositif d'affichage distant, d'une recommandation concernant des limites ayant trait à la mise en service de l'aéronef et valables jusqu'à ce que l'aéronef fasse l'objet d'une maintenance concernant la dissemblance due à la foudre.

14. Procédé selon l'une quelconque des revendications 9 à 13, dans lequel l'appareil comprend en outre un appareil aérien sans pilote ou autre dispositif autonome, et dans lequel le déplacement de l'appareil comprend un vol de l'appareil aérien sans pilote autour des surfaces extérieures ou le déplacement d'un bras robotisé d'un robot afin de réaliser un balayage robotisé de l'aéronef.
